# EUROPEAN PATENT SPECIFICATION

(11) **EP 2 541 883 B1**
(45) Date of publication and mention of the grant of the patent: **18.09.2013**
(21) Application number: 12169198.4
(22) Date of filing: 24.05.2012
(51) Int. Cl.: H04M 15/00, H04M 15/16

(54) **System for tariffication control in telecommunication networks based on quality of transmitted call**
System für die Steuerung des Gebührenerfassung in den Fernmeldenetzen im Bezug auf die Qualität des zu übertragenden Telefongespräches
Systeme pour la gestion de la tarification dans les réseaux de télécommunication basée sur la qualité de l´appel transmis

(30) Priority: 28.06.2011 CZ 20110387
(43) Date of publication of application: 02.01.2013
(73) Proprietor: Ceské Vysoké Ucení Technické V Praze, 166 27 Praha (CZ)
(72) Inventor: Holub, Jan, 25301 Hostivice (CZ)
(74) Representative: Duskova, Hana

(56) References cited:
- EP-A2- 1 215 924
- US-A1- 2003 120 771
- US-B1- 6 914 967

## Description

### Background of the Invention

Presented solution deals with a system, which allows to control tariffication in telecommunication networks by examining parameters of an ongoing call, such as its duration, cause of termination or voice transmission quality.

### Description of Prior Art

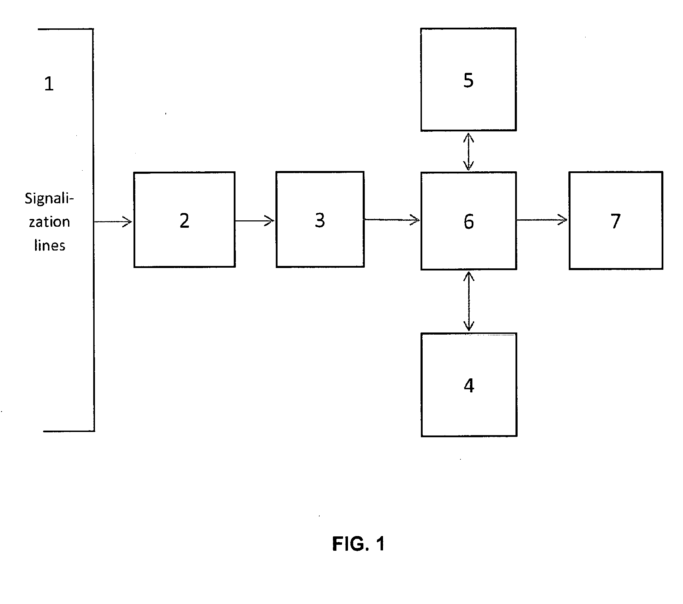

At present, calls in both fixed and mobile networks are charged according to a diagram shown in fig. 1. Information about each individual call in telecommunication network 1 is stored in form of records of individual calls CDR (Call Detail Record) in the CDR database 3. Information that relevant CDR generating servers 2 need to create a CDR, such as time of start and end of a call, caller and called party number and similar, is obtained from relevant components of technical infrastructure of the telecommunication network 1, for example from the MSC (Mobile Switching Center) network, IMS (Internet Multimedia Subsystem) and others. When invoices for a network user are generated in the invoice generating block 7, relevant tariffication servers 6 use information from the CDR database 3 and from the users database 4 and from the tariffs database 5.

Disadvantage of the current state of art is the fact that tariffication includes also calls with substandard voice transmission quality where strong background noise is present, articulation compromised due incompatible codecs, strong distortion of the voice signal, dropouts during communication or call abortion caused by the network technical problems, such as insufficient network capacity or incorrect handover of a call to another carrier in case of mobile networks and similar. This results in claims filed by customers or, in the worst case, given customer may terminate using the operator's services and subscribe with competition. Mentioned issue is partially solved in patent US 2011137772 A (DAVIS III JOHN POTTS [US]; MCNAMARA JUSTIN MICHAEL ANTHONY [US]; RECTOR JAY DARYL [US]), 09.06.2011, in which the author suggests examining quality of calls, which the customer (user) identifies as poor quality ones. Based on this examination such calls may be excluded from tariffication. Principle of this approach, however, is that the procedure is initiated upon the customer's complaint made by means of add-on software equipment of a telephone. Description of this invention implies that only calls identified by the customer himself as substandard quality calls are examined. The customer thus has to make additional effort to achieve the objective (excluding a substandard quality call from tariffication).

### Summary of the Invention

Disadvantages mentioned above are removed by a system for tariffication control in telecommunication networks based on quality of transmitted call according to the presented solution. This system enhances the existing system, which consists of at least one CDR generating server connected to signalization lines of telecommunication network, the output of which is connected via the CDR database to at least one tariffication server. This tariffication server is also interconnected with the users database output and with the tariffs database output. Invoice generating block is connected to the tariffication server output. Principle of the new solution is both enhancement of the existing blocks and insertion of new blocks. Tariffs database is enhanced by the list of permitted CAUSE RELEASE block, MOS minimum threshold values block and DELAY&ECHO threshold combination block. Users database is enhanced by list of users who request the call quality monitoring tariff. Tariffication server contains a substandard quality calls excluding block. Between the telecommunication network outputs and the tariffication server is connected a chain formed by a QCDR (Quality Call Detail Record) generating server and a QCDR database. QCDR generating server is formed by three blocks. The first block is the call termination cause determination block connected to the output of the telecommunication network signalization lines. Its output is connected via the CAUSE RELEASE record in the QCDR database to the first input of the first comparing block. To the second input of the first comparing block is connected the output of the list of permitted CAUSE RELEASE block. The second block is the MOS (Mean Opinion Score) determination block, which is connected to the output of the telecommunication network signalization lines. Its output is connected via the MOS record in the QCDR database to the first input of the second comparing block, while the second input of the second comparing block is connected to the MOS minimum threshold values block. The third block is formed by the delay and echo parameters analysis block, which is connected to the output of the telecommunication network voice lines, while its output is connected via the DELAY&ECHO record in the QCDR database to the first input of the third comparing block. To the second input of the third comparing block is connected to the output of the DELAY&ECHO threshold combination block. All three comparing blocks are a part of the tariffication server and their outputs are connected to the input of the substandard quality calls excluding block.

In one possible embodiment the output of voice lines is simultaneously connected also to the input of the MOS determination block.

The QCDR generating server may be implemented as an independent server or it may be implemented directly within the technological infrastructure of the telecommunication network. Likewise, the QCDR database may be either an independent database or it may be implemented as an enhanced CDR database.

The advantage of a system created as described above is that it allows the operator to offer higher quality services and increase incomes by introducing special, slightly higher-priced tariffs for customers who are interested in such service.

### Overview of Figures in Drawings

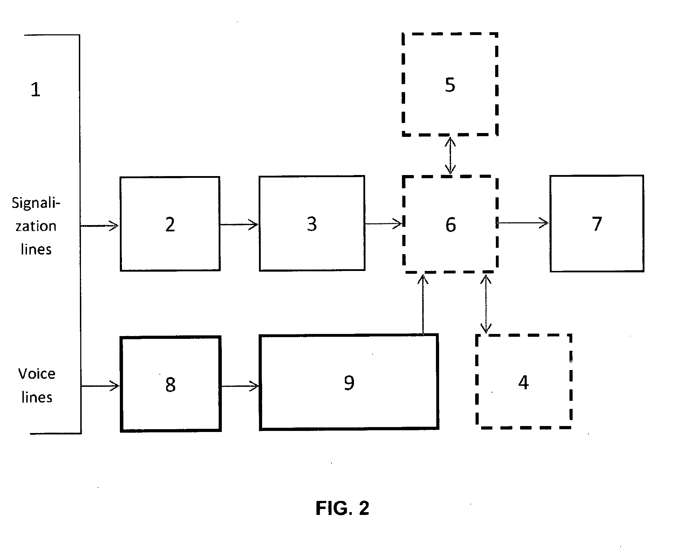

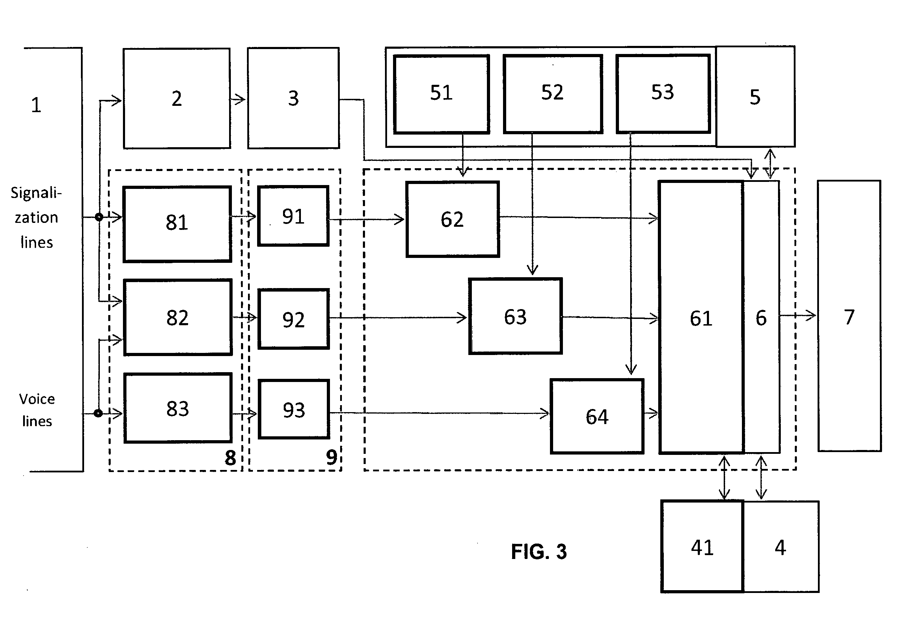

System for tariffication control in telecommunication networks based on quality of transmitted call will be further described by fig. 2, which shows simple block diagram serving for comparison with the present state of art shown in fig. 1. Fig. 3 shows individual blocks of the new system implemented in the existing system.

### Detailed Description of the Preferred Embodiments

System for tariffication control in telecommunication networks based on quality of transmitted call is shown in blocks in fig. 2 for comparison with the existing system. A chain consisting from the QCDR generating server 8 and the QCDR database 9 is here inserted into the existing system, which is described by fig. 1 in Description of Prior Art, between the telecommunication network 1 and the tariffication server or servers 6. Number of tariffication servers 6 and the QCDR generating servers 8 as well as number of CDR generating servers 2 is given by the size and used topology of operated telecommunication network 1. In the new solution the tariffs database 5 is enhanced by the list of permitted CAUSE RELEASE block 51, MOS minimum threshold values block 52 and DELAY&ECHO threshold combination block 53. Users database 4 is also enhanced by list 41 of users with the call quality monitoring tariff. Tariffication server 6 contains additional substandard quality calls excluding block 61.

More detailed diagram is shown in fig. 3. The QCDR generating server 8 is here formed by three blocks. The first block is the call termination cause determination block 81 connected to the output of the telecommunication network 1 signalization lines. Its output is connected via the CAUSE RELEASE record 91 in the QCDR database 9 to the first input of the first comparing block 62, while to its second input is connected the output of the list of permitted CAUSE RELEASE block 51. The second block is the MOS determination block 82, which is connected to the output of the telecommunication network 1 signalization lines. Its output is connected via the MOS record 92 in the QCDR database 9 to the first input of the second comparing block 63, while to its second input is connected the output of the MOS minimum threshold values block 52. Finally, the third is the delay and echo parameters analysis block 83 connected to the output of the telecommunication network 1 voice lines. Its output is connected via the DELAY&ECHO record 93 in the QCDR database 9 to the first input of the third comparing block 64, while to its second input is connected the output of the DELAY&ECHO threshold combination block 53. Outputs of the first comparing block 62, the second comparing block 63 and the third comparing block 64, it means of blocks that are part of the tariffication server 6, are connected to the input of the substandard quality calls excluding block 61. In given example the output of the voice lines is simultaneously connected to the input of the MOS determination block 82.

Principle of the presented solution is therefore enhancement of tariffication scheme by monitoring of transmitted calls quality in real time. Monitored facts are the following: call is terminated in a non-standard way or is aborted prematurely, quality of transferred voice in direction called party-caller in the Mean Opinion Score unit, hereinbelow referred to only as MOS according to ITU-T P.800, including the background noise level, distortion and articulation of transmitted speech, signal dropouts and finally the signal delay in both directions and echo level of the caller.

This information is collected by the QCDR generating server 8. Call termination cause determination block 81 performs the SS7 analysis if the signalization is processed by digital telecommunication networks, circuit-oriented, or it performs the SIP analysis if the signalization is processed in packet-oriented telecommunication networks - IP or other signalizations used for voice transfer.

Quality of voice transmission is analyzed in the MOS determination block 82. It is a non-intrusive measurement of transferred signal quality using procedures ITU-T P.561, which is a recommendation of the ITU-T describing types of mandatory and optional parameters that can be measured on the voice channel, and procedure P.562, which is a recommendation of the ITU-T describing means of combining parameters measured according to P.562 into a resulting index used to evaluate transferred speech quality. It is also possible to use an analysis based on ITU-T P.563, which is a recommendation of the ITU-T containing an algorithm for non-intrusive speech quality assessment by analyzing the transferred voice signal or similar algorithm. Another possibility is to use procedure according to ITU-T P.564, recommendation of the ITU-T describing requirements for algorithms, which estimate transferred voice quality in IP networks, e.g. losses, delays and changes in delay of packets etc. or similar in IP networks, or their combinations in heterogeneous networks.

Delay of signal in both directions and level of the caller's echo is determined in the delay and echo parameters analysis block 83 using analysis according to the procedure ITU-T P.561 or similar.

Information about quality of each call in the telecommunication network 1 analyzed by the QCDR generating server 8 is stored in the QCDR database 9 containing the Quality Call Detail Record always into its relevant part, it means to the CAUSE RELEASE record 91, MOS record 92 or to the DELAY&ECHO record 93, see fig. 3. Obtained information is subsequently compared with limits set by the operator. Data stored in the list of permitted CAUSE RELEASE block 51 are compared in the first comparing block 62 with information obtained at the output of the call termination cause determination block 81, data stored in the MOS minimum threshold values block 52 are compared in the second comparing block 63 with information at the output of the MOS determination block 82 and data stored in the DELAY&ECHO threshold combination block 53 are compared in the third comparing block 64 with data at the output of the delay and echo parameters analysis block 83. Calls with quality lower in at least one of the above-mentioned criteria than limits set by the operator are subsequently excluded by the substandard quality calls excluding block 61, which is part of the tariffication servers 6, from the tariffication process for those customers who subscribed to a tariff containing this service.

QCDR generating servers 8 may be either independent servers or they may be implemented directly in the technological infrastructure of the telecommunication network 1 and thus exploit for example free processing capacity of IP routers or MSC. Likewise, the QCDR database 9 may be either an independent database or enhanced original CDR database 3 where a record of each individual call is enhanced by information stored in the CAUSE RELEASE record 91, MOS record 92 and/or in the DELAY&ECHO record 93.

Task of the QCDR generating server 8 is to attach to each realized call in the telecommunication network 1 relevant values of parameters CAUSE RELEASE, MOS and DELAY&ECHO. Value of parameter CAUSE RELEASE indicates the cause why the call was terminated. In circuit-oriented, or packet-oriented networks respectively, it can be detected by analyzing the given signalization by the SS7, or SIP analysis respectively. Causes for a call termination are multiple, ranging from standard termination of a call by one of the parties to non-standard reasons, which typically include momentarily insufficient free capacity of transmission network, fault of a terminal or a network component, unsuccessful handover of a call when a mobile device moves within the network, etc. Values used to indicate standard or non-standard call termination may be taken over from used type of signalization, for example in the SS7 networks the value CAUSE RELEASE=16 indicates standard termination of a call, other values indicate non-standard termination.

Value of parameter MOS (Mean Opinion Score) in direction from counterstation to subscriber is determined in the circuit-switching networks by means of one of non-intrusive algorithms for measuring the quality of transferred signal using its analysis, e.g. using combination of two recommendations P.561 and P.562 or by means of algorithm according to ITU-T P.563. In packet-oriented networks it is also possible to use an alternative method of quality estimation derived from transfer of packets, for example their loss, delay and change of packets delay and similar, for instance using procedure according to ITU-T P.564. In heterogeneous networks, which for the voice transfer use both circuits switching and packets transfer, both procedures mentioned above may be combined, or only the analysis of the voice signal according to P.561/2 or P.563 at the end of the heterogeneous transmission chain may be used. The output parameter is a number from 1.00 to 5.00 where higher value indicates higher quality of incoming voice signal.

Parameters DELAY and ECHO will be determined by analysis of the voice signal in both directions, for example according to P.561. DELAY parameter value in one direction is determined for instance in milliseconds in the range 0..2000 ms. ECHO parameter value is the speaker's echo attenuation determined for instance in dB in the range 0..99 dB.

The QCDR database 9 stores the CAUSE RELEASE, MOS, DELAY&ECHO information with each individual call in the network. Usually, it is implemented as an enhancement of the existing CDR database used by the tariffication system for storing data about calls, which are necessary for their billing, such as the caller and called number, call duration and similar.

Tariffication process is enhanced as follows. In the users database 4 enhanced by the list 41 of users with the call quality monitoring tariff is stored information about the customer's current tariff. This allows clear identification of subscribers who subscribed to those tariffs, which include excluding calls with insufficient quality from tariffication; prices of such tariffs are expected to be slightly higher than regular call tariffs. The enhanced tariffs database 5, in addition to parameters of individual tariffs, includes also threshold values of parameters CAUSE RELEASE, MOS and DELAY&ECHO.

During the tariffication procedure as such, for example when creating a customer's monthly bill, for each call, which in original practice would have been included in the invoice, are compared values of parameters CAUSE RELEASE, MOS and DELAY&ECHO with their threshold values. Calls, which do not meet requirements for quality at least in one of the mentioned parameters, it means they were not terminated in a standard way, or the MOS value was lower than predefined threshold, or the combination of delay and echo was greater than allowed limit, such calls are excluded from the current tariffication procedure and are not charged in the final invoice. Information indicating which calls were excluded may be listed in the invoice for information purposes.

In practice, for example subscriber A, who subscribed to the tariff with voice calls quality monitoring, places a call to subscriber B. During the call, the QCDR generating server 8 monitors quality of voice transfer MOS in incoming direction, it means from subscriber B to subscriber A, and delay and echo level of the party A. After the call is ended, these parameters are stored as records in the QCDR database 9 together with parameter CAUSE RELEASE obtained from signalization relevant for the call.

At the end of tariffication period the tariffication server 6 initiates a tariffication procedure, which examines all records in the QCDR database 9 relating to a given subscriber in the role of a caller, or possibly in case of roaming also in the role of a called party. During analysis of the call described above, parameters CAUSE RELEASE, MOS and DELAY&ECHO are compared with their threshold values. The call is subsequently included in the resulting invoice only in case that its quality was not in any of monitored parameters lower than defined thresholds.

### Industrial Applicability

The system presented above may be exploited by operators of both fixed as well as mobile telecommunication networks to offer higher quality of services they provide to their subscribers and to increase their incomes by introducing special tariffs for customers who will be interested in this service.

## Claims

1. System for tariffication control in telecommunication networks based on quality of transmitted call where the system consists of at least one CDR (Call Detail Record) generating server (2) connected to signalization lines of the telecommunication network (1), the output of which is via the CDR database (3) connected to at least one tariffication server (6), which is also interconnected with the output of the users database (4) and the output of the tariffs database (5), and the output of which is interconnected with the invoice generating block (7) **characterized by** the fact that the tariffs database (5) is enhanced by the list of permitted CAUSE RELEASE block (51), MOS (Mean Opinion Score) minimum threshold values block (52) and by the DELAY&ECHO threshold combination block (53), the users database (4) is enhanced by the list (41) of users with the call quality monitoring tariff, and the tariffication server (6) has the substandard quality calls excluding block (61), and also between the telecommunication network (1) outputs and the tariffication server (6) is connected a chain formed by the QCDR (Quality Call Detail Record) generating server (8) and the QCDR database (9) where the QCDR generating server (8) is formed by the call termination cause determination block (81) connected to the output of the telecommunication network (1) signalization lines, the output of which is connected via the CAUSE RELEASE record (91) in the QCDR database (9) to the first input of the first comparing block (62), while to its second input is connected the output of the list of permitted CAUSE RELEASE block (51), further the QCDR generating server (8) is formed by the MOS determination block (82) connected to the output of the telecommunication network (1) signalization lines, the output of which is connected via the MOS record (92) in the QCDR database (9) to the first input of the second comparing block (63), while to its second input is connected the output of the MOS minimum threshold values block (52), and finally the QCDR generating server (8) is formed by the delay and echo parameters analysis block (83) connected to the output of voice lines of the telecommunication network (1), the output of which is connected via the DELAY&ECHO record (93) in the QCDR database (9) to the first input of the third comparing block (64), while to its second input is connected the output of the DELAY&ECHO threshold combination block (53), where the outputs of the first comparing block (62), the second comparing block (63) and the third comparing block (64), which are part of the tariffication server (6), are connected to the input of substandard quality calls excluding block (61).

2. System according to claim 1 **characterized by** the fact that the output of voice lines is simultaneously connected also to the input of the MOS determination block (82).

3. System according to claim 1 or 2 **characterized by** the fact that the QCDR generating server (8) is an independent server.

4. System according to claim 1 or 2 **characterized by** the fact that the QCDR generating server (8) is implemented directly within the technological infrastructure of the telecommunication network (1).

5. System according to claim 1 and any of claims 2 to 4 **characterized by** the fact that the QCDR database (9) is an independent database.

6. System according to claim 1 and any of claims 2 to 4 **characterized by** the fact that the QCDR database (9) is implemented as an enhanced CDR database (3).

## Patentansprüche

1. System für die Steuerung der Gebührenerfassung in den Fernmeldenetzen im Bezug auf die Qualität des zu übertragenden Telefongespräches, wo das jeweilige System mindestens aus einem an die Signalleitungen des Fernmeldenetzes (1) angeschlossenen Server (2) für die Bildung von CDR (Call Detail Record) besteht, dessen Ausgang mittels der CDR-Datenbank (3) mindestens an einen Server (6) zur Gebührenerfassung angeschlossen ist, der gleichzeitig mit dem Ausgang der Teilnehmer-Datenbank (4), sowie mit dem Ausgang der Gebühren-Datenbank (5) durchgeschaltet ist und dessen Ausgang mit der Einheit zur Rechnungsstellung (7) durchgeschaltet ist, **dadurch gekennzeichnet, dass** die Gebühren-Datenbank (5) um eine Einheit (51) mit der Liste von genehmigten CAUSE RELEASE, eine MOS (Mean Opinion Score)-Einheit (52) mit den minimalen Schwellenwerten und eine DELAY&ECHO-Einheit (53) mit der Schwellenkombination erweitert ist, die Teilnehmer-Datenbank (4) ist um eine Liste (41) von Teilnehmern mit der Gebühr für die Überwachung der Qualität des Telefongespräches erweitert und der Server (6) zur Gebührenerfassung verfügt über eine Einheit (61) zur Vermeidung von eine ungenügende Qualität aufweisenden Telefongesprächen und weiter ist zwischen den Ausgängen vom Fernmeldenetz (1) und dem Server (6) zur Gebührenerfassung eine aus dem Server (8) für die Bildung von QCDR (Quality Call Detail Record) und der QCDR-Datenbank (9) bestehende Kette angeschlossen, wo der jeweilige Server (8) für die Bildung von QCDR aus der an den Ausgang von Signalleitungen des Fernmeldenetzes (1) angeschlossenen Einheit (81) zur Ermittlung des Grundes für die Beendigung des Telefongespräches, deren Ausgang mittels der CAUSE RELEASE-Aufnahme (91) der QCDR-Datenbank (9) an den ersten Eingang der ersten Vergleichsgruppe (62) angeschlossen ist, an deren zweiten Eingang der Ausgang von der Einheit (51) mit der Liste von genehmigten CAUSE RELEASE angeschlossen ist, aus der an den Ausgang von Signalleitungen des Fernmeldenetzes (1) angeschlossenen Einheit (82) zur MOS-Ermittlung, deren Ausgang mittels der MOS-Aufnahme (92) der QCDR-Datenbank (9) an den ersten Eingang der zweiten Vergleichsgruppe (63) angeschlossen ist, an deren zweiten Eingang der Ausgang der MOS-Einheit (52) mit den minimalen Schwellenwerten angeschlossen ist, sowie aus der an den Ausgang von Sprachleitungen des Fernmeldenetzes (1) angeschlossenen Einheit (83) zur Analyse der Verzögerungs- und Echoparameter besteht, deren Ausgang mittels der DELAY&ECHO-Aufnahme (93) der QCDR-Datenbank (9) QCDR an den ersten Eingang der dritten Vergleichgruppe (64) angeschlossen ist, an deren zweiten Eingang der Ausgang der DELAY&ECHO-Einheit (53) mit der Schwellenkombirtation angeschlossen ist, wobei die Ausgänge der ersten Vergleichsgruppe (62), zweiten Vergleichsgruppe (63) und dritten Vergleichsgruppe (64), die den Bestandteil des Servers (6) zur Gebührenerfassung bilden, an den Eingang der Einheit (61) zur Vermeidung der eine ungenügende Qualität aufweisenden Telefongespräche angeschlossen sind.

2. System nach dem Anspruch 1 **dadurch gekennzeichnet, dass** der Ausgang von Sprachleitungen gleichzeitig auch an den Eingang der Einheit (82) zur MOS-Ermittlung angeschlossen ist.

3. System nach den Ansprüchen 1 oder 2 **dadurch gekennzeichnet, dass** der Server (8) für die Bildung von QCDR ein selbständiger Server ist.

4. System nach den Ansprüchen 1 oder 2 **dadurch gekennzeichnet, dass** der Server (8) für die Bildung von QCDR unmittelbar innerhalb der technologischen Infrastruktur des Fernmeldenetzes (1) ausgeführt ist.

5. System nach dem Anspruch 1 und jedwedem der Ansprüche 2 bis 4 **dadurch gekennzeichnet, dass** die QCDR-Datenbank (9) eine selbständige Datenbank ist.

6. System nach dem Anspruch 1 und jedwedem der Ansprüche 2 bis 4 **dadurch gekennzeichnet, dass** die QCDR-Datenbank (9) als eine erweiterte CDR-Datenbank (3) ausgeführt ist.

## Revendications

1. Système pour la gestion de la tarification dans les réseaux de télécommunication basée sur la qualité de l'appel transmis où le système consiste d'au moins un serveur (2) pour la création de CDR (Call Detail Record) connecté aux lignes de signalisation du réseau de télécommunication (1) dont la sortie est connectée via la base de données (3) de CDR à au moins un serveur (6) de tarification qui est en même temps interconnecté avec la sortie de la base de données (4) d'utilisateurs et avec la sortie de la base de données (5) des tarifs et dont la sortie est interconnectée avec le bloc (7) pour l'établissement des factures **caractérisé par le fait que** la base de données (5) des tarifs est élargie par le bloc (51) de la liste de CAUSE RELEASE permises, par le bloc (52) des valeurs seuils minimales MOS (Mean Opinion Score) et par le bloc (53) de la combinaison seuil DELAY&ECHO, la base de données (4) d'utilisateurs est élargie par la liste (41) d'utilisateurs avec le tarif de suivi de contrôle de la qualité et le serveur (6) de tarification contient le bloc (61) d'exclusion des appels de qualité non convenable et aussi, entre les sorties du réseau de télécommunication (1) et le serveur (6) de tarification, il y a une chaîne connectée qui est formée par le serveur (8) pro la création de QCDR (Quality Call Detail Record) et par la base de données (9) de QCDR où le serveur (8) pour la création de QCDR est fait par le bloc (81) de détermination de raison de la terminaison de l'appel connecté à la sortie des lignes de signalisation du réseau de télécommunication (1) dont la sortie est connectée via l'enregistrement de CAUSE RELEASE (91) de la base de données (9) de QCDR à la première entrée du premier bloc (62) de comparaison et à sa deuxième entrée, il est connecté la sortie du bloc (51) de la liste de CAUSE RELEASE permises, par le bloc (82) de détermination de MOS connecté à la sortie des lignes de signalisation du réseau de télécommunication (1) dont la sortie est connectée via l'enregistrement de MOS (92) de la base de données (9) de QCDR à la première entrée du deuxième bloc (63) de comparaison et à sa deuxième entrée, il est connecté la sortie du bloc (52) des valeurs seuils minimales MOS et finalement, le serveur (8) pour la création de QCDR est formé par le bloc (83) de l'analyse des paramètres du retard et de l'éco connecté à la sortie des lignes de voix du réseau de télécommunication (1) dont la sortie est connectée via l'enregistrement de DELAY&ECHO (93) de la base de données (9) de QCDR à la première entrée du troisième bloc (64) de comparaison et à sa deuxième entrée, il est connecté la sortie du bloc (53) de la combinaison seuil DELAY&ECHO où les sorties du premier bloc (62) de comparaison, du deuxième bloc (63) de comparaison et du troisième bloc (64) de comparaison qui font partie du serveur (6) de tarification, sont connectées à l'entrée du bloc (61) d'exclusion des appels de qualité non convenable.

2. Système selon la revendication 1 **caractérisé par le fait que** la sortie des lignes de voix est en même temps connectée aussi à l'entrée du bloc (82) de détermination de MOS.

3. Système selon la revendication 1 ou 2 **caractérisé par le fait que** le serveur (8) pour la création de QCDR est un serveur indépendant.

4. Système selon la revendication 1 ou 2 **caractérisé par le fait que** le serveur (8) pour la création de QCDR est réalisé directement dans l'infrastructure technologique du réseau de télécommunication (1).

5. Système selon la revendication 1 et selon n'importe quelle revendication des revendications 2 à 4 **caractérisé par le fait que** la base de données (9) de QCDR est une base de données indépendante.

6. Système selon la revendication 1 et selon n'importe quelle des revendications 2 à 4 **caractérisé par le fait que** la base de données (9) de QCDR est réalisée comme une base de données (3) de CDR élargie.
